# EUROPEAN PATENT SPECIFICATION

(11) **EP 3 307 074 B1**
(45) Date of publication and mention of the grant of the patent: **11.12.2019**
(21) Application number: 16807920.0
(22) Date of filing: 09.06.2016
(51) Int. Cl.: A23D 9/007, A23D 9/02, A23G 1/36, C11C 1/08

(54) **IMPROVED EDIBLE FAT**
VERBESSERTES SPEISEFETT
MATIÈRE GRASSE COMESTIBLE AMÉLIORÉE

(30) Priority: 10.06.2015 SE 1550785
(43) Date of publication of application: 18.04.2018
(73) Proprietor: AAK AB (Publ), 215 32 Malmö (SE)
(72) Inventor: ANDERSEN, Morten Daugaard, 8270 Højbjerg (DK)
(74) Representative: Patentgruppen A/S
(86) International application number: PCT/SE2016/050552
(87) International publication number: WO 2016/200324

(56) References cited:
- EP-A1- 0 496 310
- EP-A1- 2 868 204
- WO-A1-2014/037007
- WO-A1-2015/088433
- WO-A2-98/30108
- US-A1- 2005 084 598
- DATABASE WPI Week 200865 Thomson Scientific, London, GB; AN 2008-L05687 XP002786029, & JP 2008 206490 A (FUJI SEIYU KK) 11 September 2008 (2008-09-11)
- HACHIYA, I . ET AL.: 'Seeding Effects on Solidification Behavior of Cocoa Butter and Dark Chocolate. 1. Kinetics of Solidification' JAOCS. vol. 66, no. 12, December 1989, ISSN 0003-021X pages 1757 - 1762, XP002061519

## Description

### TECHNICAL FIELD

The invention relates to the field of edible fats. In particular the invention relates to a method for obtaining high-melting edible fat crystals. Also disclosed herein are chocolate products comprising such improved edible fat.

### BACKGROUND

Vegetable fats are part of a wide variety of foodstuff and are also used in cosmetic- and pharmaceutical products.

Vegetable fats can be viewed as a blend of triglycerides and small amounts of other substances. The chemical composition of the triglycerides depends on the source of the vegetable fat or oil and may be modified by processing of the vegetable fat.

The solid part of a vegetable fat at a certain temperature comprises fat crystals made of triglycerides. The crystallization behavior of blends of triglycerides is complex and not fully understood. Different crystal forms of varying stability are known to form during fat solidification. The most stable crystal forms will have the highest melting point.

In many applications it is important to obtain good melting properties of the vegetable fat, because those properties influence both sensory parameters and the overall temperature stability of the vegetable fat.

During chocolate production the chocolate composition, including vegetable fat like cocoa butter, is normally subjected to a so-called tempering process to promote the formation of desirable amounts of stable fat crystals that are important for good mouthfeel and shelf life.

The tempering process is performed in a tempering apparatus in which the chocolate is subjected to a carefully pre-programmed temperature profile. Subsequently, the chocolate is used for making the chocolate confectionary and the resulting confectionary is cooled following a predetermined cooling program.

The tempering process serves the purpose of making a sufficient amount of a desired type of seed crystals, which in turn is responsible for obtaining a rather stable chocolate product less prone to changes in the crystal composition of the solid fats.

An addition or an alternative to the tempering process is to blend pre-formed seed crystals of a desired form into the chocolate during the manufacturing process.

Sato et al., JAOCS, Vol. 66, no.12, 1989, describe the use of crystalline seed to accelerate the crystallization going on in cocoa butter and dark chocolate upon solidification.

JP 2008206490 discloses a tempering promoter in the form of SatUSat-type triglycerides, where Sat is a saturated fatty acid having 20 or more carbon atoms and U is an unsaturated fatty acid such as oleic acid.

EP 0 294 974 A2 describes a powdery tempering accelerator also based on SatUSat-type triglycerides having a total number of carbon atoms of the constituent fatty acid residues of between 50 and 56. The tempering accelerator is added, for example, as dispersion in a dispersion medium, as a seed for desired crystal formation to the chocolate during the production.

There still exists a need for methods to improve the crystallization behaviour in vegetable fat.

### SUMMARY

The invention relates to a method of increasing an endotherm melt peak position of an edible fat to an increased value compared to a starting value,
said increased value being 40 degrees Celsius or higher, said endotherm melt peak position being measured by Differential Scanning Calorimetry by heating samples of 10 +/- 1 mg of said edible fat from 20 degrees Celsius to 65 degrees Celsius at a rate of 3 degrees Celsius per minute to produce a melting thermogram defining said endotherm melt peak position, the method comprising the steps of:
a) melting the edible fat by applying heat,
b) storing the edible fat at a temperature below said increased value of said endotherm melt peak position for at least 5 hours at a temperature of at least 30 degrees Celsius, whereby an increase in said endotherm melt peak position for said edible fat is obtained when compared to said starting value,
   wherein said edible fat comprises SatOSat-triglycerides in an amount of 40 - 99% by weight,
   wherein said edible fat comprises triglycerides obtained from non-vegetable sources, wherein Sat stands for a saturated fatty acid, and O stands for oleic acid.

Also disclosed herein is a confectionary product comprising said edible fat manufactured according to the method in any of its embodiments.

Further disclosed herein is the use of the edible fat manufactured according to the method of any its embodiments for production of confectionary products.

### FIGURES

The invention will be described in the following with reference to the drawings, where
figure 1 shows the effect of storage temperature and storage time on the endotherm melt peak position according to an embodiment of the invention where the x-axis refers to temperature and the y-axis is given in Watts per gram, and
figure 2 shows the effect of storage temperature and storage time on the endotherm melt peak position according to an embodiment of the invention where the x-axis refers to temperature and the y-axis is given in Watts per gram.

### FIGURE REFERENCES

37D5H. Melt thermogram for 37 degrees Celsius and 5 hours storage time
20D5H. Melt thermogram for 20 degrees Celsius and 5 hours storage time
37D96H. Melt thermogram for 37 degrees Celsius and 96 hours storage time
20D96H. Melt thermogram for 20 degrees Celsius and 96 hours storage time

### DETAILED DESCRIPTION

### Definitions

As used herein, the term "fatty acid" encompasses free fatty acids and fatty acid residues in triglycerides.

As used herein "edible" is something that is suitable for use as food or as part of a food product, such as a dairy or confectionary product. An edible fat is thus suitable for use as fat in food or food product and an edible composition is a composition suitable for use in food or a food product, such as a dairy or confectionary product.

As used herein, "%" or "percentage" all relates to weight percentage i.e. wt.% or wt.-% if nothing else is indicated.

As used herein, the singular forms "a", "and" and "the" include plural referents unless the context clearly dictates otherwise.

As used herein, "vegetable oil" and "vegetable fat" is used interchangeably, unless otherwise specified.

As used herein, "at least one" is intended to mean one or more, i.e. 1, 2, 3, 4, 5, 6, 7, 8, 9, 10, etc.

As used herein, 'transesterification' should be understood as replacing one or more of the fatty acid moieties of a triglyceride with another fatty acid moiety or exchanging one or more fatty acid moieties from one triglyceride molecule to another. A fatty acid moiety may be understood as a free fatty acid, a fatty acid ester, a fatty acid anhydride, an activated fatty acid and/or the fatty acyl part of a fatty acid. The term 'transesterification' as used herein may be used interchangeably with 'interesterification'. The transesterification process may be an enzymatic transesterification or chemical transesterification. Both chemical transesterification and enzymatic transesterification is described well in the art. Both chemical and enzymatic transesterification may be done by standard procedures.

As used herein a "chocolate" is to be understood as chocolate and/or chocolate-like products. Some chocolate comprises cocoa butter, typically in substantial amounts, where some chocolate-like product may be produced low or even without cocoa butter, e.g. by replacing the cocoa butter with cocoa butter equivalent, cocoa butter substitute, etc. Also, many chocolate products comprises cocoa powder or cocoa mass, although some chocolate products, such as typical white chocolates, may be produced without cocoa powder, but e.g. drawing its chocolate taste from cocoa butter. Depending on the country and/or region there may be various restrictions on which products may be marketed as chocolate. By a chocolate product is meant a product, which at least is experienced by the consumer as chocolate or as a confectionery product having sensorial attributes common with chocolate, such as e.g. melting profile, taste etc.

As used herein, the term "fraction" shall in this regard be understood to be a product remaining after a physical separation of the constituents of a natural source of a fat. This product may subsequently be subjected to a transesterification.

As used herein, the term "vegetable" shall be understood as originating from a plant retaining its original chemical structure/composition. Thus, a vegetable fat or vegetable triglycerides are still to be understood as vegetable fat or vegetable triglycerides after fractionation etc. as long as the chemical structure of the fat components or the triglycerides are not altered. When vegetable triglycerides are for example transesterified they are no longer to be understood as a vegetable triglyceride in the present context.

Similarly, the term "non-vegetable" in the context of "non-vegetable triglyceride" or "non-vegetable fat" when used herein is intended to mean obtained from other sources than native vegetable oils or fractions thereof, or obtained after transesterification.

As used herein, the term "main endotherm melt peak position" may refer to the peak having the largest integral and/or as the peak having the largest maximum value.

As used herein, the term "endotherm melt peak position" may refer to the position of a melt peak, which may be the main endotherm melt peak or it may be a smaller melt peak.

As used herein "partly melted" is intended to mean not totally melted and not totally solid or crystalline. Within a certain temperature range the seed product has to be melted enough to be pumpable, and may not be melted to an extent that no seed crystals capable of seeding chocolate remains. In certain embodiments partly melted may be understood more narrow, for example that a certain percentage is melted and a certain percentage is non-melted, i.e. solid or crystalline. This may for example be represented by the solid fat content (SFC). Several methods for measuring SFC are known in the art.

As used herein, the term "slurry" is a partly melted composition, where at least some seed crystals capable of seeding chocolate are present. Thus a "slurry" may also for example be understood as a partly melted suspension, partly molten suspension or a paste.

As used herein, the term "heat stability" is intended to means that the product, such as a chocolate or chocolate-like product, having this characteristic is relatively stable and resistant to the negative effects normally caused by heat, especially heating to temperatures above normal temperatures an even above regular room temperature. The negative effects may for example include bloom formation.

As used herein a "heat stable chocolate" is a chocolate which has a relatively high resistance to heat, and heat-related effects, particularly bloom. The heat stable chocolate will in certain embodiments retain this heat stability, particularly bloom stability, at temperatures above which such stability is normally lost for conventional chocolate products.

### Abbreviations

Sat = saturated fatty acid/acyl-group
U = unsaturated fatty acid/acyl-group
St = stearic acid/stearate
A = Arachidicacid/arachidate
B = Behenic acid/behenate
Lig = Lignoceric acid/lignocerate
O = oleic acid/oleate
DSC = Differential Scanning Calorimetry
TAG = triacylglyceride = triglyceride
AOCS = American Oil Chemists' Society

Moreover, the invention relates to a method of increasing an endotherm melt peak position of an edible fat to an increased value compared to a starting value,
said increased value being 40 degrees Celsius or higher, said endotherm melt peak position being measured by Differential Scanning Calorimetry by heating samples of 10 +/- 1 mg of said edible fat from 20 degrees Celsius to 65 degrees Celsius at a rate of 3 degrees Celsius per minute to produce a melting thermogram defining said endotherm melt peak position, the method comprising the steps of:
a) melting the edible fat by applying heat,
b) storing the edible fat at a temperature below said increased value of said endotherm melt peak position for at least 5 hours at a temperature of at least 30 degrees Celsius, whereby an increase in said endotherm melt peak position for said edible fat is obtained when compared to said starting value,
   wherein said edible fat comprises SatOSat-triglycerides in an amount of 40 - 99% by weight,
   wherein said edible fat comprises triglycerides obtained from non-vegetable sources, wherein Sat stands for a saturated fatty acid, and O stands for oleic acid.

The storage time to obtain a certain increase in endotherm melt peak position may be decreased, when the storage temperature is increased. The storage time and storage temperature needed to achieve a desired increased value of the endotherm melt peak position may also depend on the fat composition. For example, the storage time and/or temperature may also be decreased when the edible fat comprises a higher amount of the type of SatOSat-triglyceride that gives rise to the endotherm melt peak position being increased to a value of 40 degrees Celsius or higher. Thus, the storage time and/or temperature may for example decrease, when the edible fat comprises a higher amount of StOSt-triglycerides relatively to a lower amount. As an example, with a higher amount of SatOSat i.e. a more pure fat system, the temperature may be increased and a desired increase in endotherm melt peak position may be obtained in less time. By including triglycerides obtained from non-vegetable sources in the edible fat, such as for example triglycerides obtained by transesterification, it may be possible to obtain edible fats comprising a relatively higher amount of specific triglycerides, such as for example StOSt, AOA or BOB, as compared to obtaining triglycerides solely from vegetable sources. Thus, the amounts of StOSt-, AOA- or BOB-triglycerides obtained from non-vegetable sources comprised in an edible fat may for example be more than 70% by weight or higher, such as more than 80% by weight or higher, such as more than 90% by weight or higher. In any case, both the storage time and the storage temperature could be set to different values, taken into consideration the specific example, hereunder the specific composition and the desired significance of the endotherm melt peak position along with the time and temperature available at facilities for storage. However, the specific combination of the applied storage time and the applied storage temperature should always be such that an endotherm melt peak position of about 40 degrees Celsius or higher is obtained after storage.

One advantage of the invention may be that by using triglycerides from non-vegetable sources a tailor-made product may be obtained. This may be due to the fact that triglycerides from non-vegetable sources can, at least to some degree, be tailor-made for the purpose and not having to rely on the composition and quality of naturally occurring vegetable fats that may to a greater degree be influenced by seasonal changes such as whether, supply and diseases. By using triglycerides from non-vegetable sources a greater control of the exact edible fat composition is achieved, which may lead to more uniform and homogeneous properties of the edible fat obtained according to the method of the invention. For example the triglyceride composition from non-vegetable sources may exhibit less variation, may be obtained in a more cost-effective way, and may require less modification due to more homogeneous properties. These properties may among others be superior heat and bloom stability when used as a seed for seeding chocolate.

One of several advantages of an embodiment of the invention is that a method for obtaining higher-melting edible fat crystals having certain desired properties can be performed in a relatively efficient manner due to the fact that triglycerides obtained from non-vegetable sources can be obtained very selectively and precisely and thus may lead to a greater purity and thus may lead to a predictable and reproducible quality and enhanced properties of the obtained edible fat.

Endotherm melt peak positions are an excellent measure of the melting properties of a vegetable fat. DSC is a widely used method to characterize the melting properties of vegetable fats.

An increase in an endotherm melt peak position reflects a relatively higher amount of stable high-melting fat crystals, which may be desirable. As such, an increase in endotherm melt peak position of the edible fat obtained according to the method of the invention will thus reflect a higher melting edible fat comprising a relatively high amount of high-melting fat crystals.

The melting point of the edible fat, which is reflected in the measured DSC endotherm melt peak positions of the edible fat, may be important, when the edible fat is used as for example a seed for seeding chocolate. When an endotherm melt peak position of the edible fat is increased to a value of about 40 degrees Celsius or higher, the edible fat does not melt entirely and thus maintains its seeding capacity when present in a chocolate exposed to high temperatures of for example 37 degrees Celsius or higher.

According to an embodiment of the invention, the seed composition is substantially free of non-fat components, such as sugar or cocoa powder. Thus, the seed composition may have a non-fat content of less than 5% by weight, such as less than 1% by weight, such as less than 0.1% by weight.

According to an advantageous embodiment, said melting thermogram is obtained by Differential Scanning Calorimetry (DSC) by a METTLER TOLEDO DSC 823e with a HUBER TC45 immersion cooling system, where 10 +/- 1 mg samples of the chocolate confectionery product is hermetically sealed in a 40 microliter aluminum pan with an empty pan as reference to produce a DSC melting thermogram

According to an embodiment of the invention, said endotherm melt peak position is a main endotherm melt peak position.

The triglycerides obtained from non-vegetable sources may be obtained from various non-vegetable sources. According to an advantageous embodiment of the invention, said triglycerides obtained from non-vegetable sources comprise triglycerides obtained by transesterification.

Transesterification provides a selective and effective process for conversion of a low-value fat or fat fraction into valuable transesterified fraction, comprising for example high SatOSat-triglycerides amounts, especially when an enzymatic transesterification is used, which may have a very high conversion specificity.

By means of transesterification, a more consistent and predictable triglyceride composition may be provided. Thereby, the edible fat obtained by the method of the invention comprising transesterified triglycerides, may be of a more consistent quality.

One advantage of the above embodiment is that a method of increasing an endotherm melt peak position of an edible fat comprising triglycerides obtained by transesterification, having certain desired characteristics may be controlled by the transesterification process.

Furthermore, it should be noted that by 'transesterification' may preferably be meant enzymatic transesterification, and such an enzymatic transesterification may be selective and give a particularly high output of desired triglycerides. But it may also preferable mean selective acid or base catalyzed chemical transesterification.

Other sources for triglycerides obtained from non-vegetable sources are possible as an alternative to triglycerides obtained by transesterification, or which may be used in combination with triglycerides obtained by transesterification. Thus, according to an advantageous embodiment of the invention, said triglycerides obtained from non-vegetable sources comprise triglycerides obtained from unicellular organisms.

The price of various naturally occurring fats from vegetable sources may vary tremendously and thus the utilization of unicellular organisms capable of producing triglycerides in increased quantities and subsequent large-scale production may present an enormous financial interest. I.e. an advantage of the above embodiment may be that the edible fat may be provided at a relatively low price.

Unicellular organisms may be utilized in a variety of different ways to produce triglycerides with certain compositions. Several methods for using unicellular organisms to produce triglycerides are known in the art. Examples of possible methods, which may be employed, are described in the Australian patent AU-B-14153/88, which is hereby incorporated by reference. Further examples of possible methods, which may be employed, are described in the international patent application WO 2013/158938.

Edible fats obtained from unicellular organisms may be obtained by various processes, such as by a process for the preparation of fats, where the process comprises cultivating a fat-producing microorganism and subsequently recovering the fats accumulated in the microorganism. It is known that fats and oils can be produced by cultivating oil/fat-producing microorganisms like algae, bacteria, molds and yeasts. Such microorganisms synthesize the lipids in the ordinary course of their cellular metabolism.

In more detail, such process for production of edible fats may for example include using as a microorganism a mutant of a yeast from the genera Apiotrichum, Candida, Cryptococcus, Endomyces, Hansenula, Lipomyces, Pichia, Rhodosporidium, Rhodotorula, Saccharomyces, Sporobolomyces, Torulopsis, Trichosporon and Yarrowia or a fusant derived from in total two, three of four, genetically different mutants and/or yeast cells, all belonging to the above mentioned genera, wherein the enzyme system responsible for the conversion of stearic acid into oleic acid is totally or partially genetically blocked.

Thus, a process for the production of edible fats may be used in some embodiments of the invention, where the process comprises cultivating a fat-producing micro-organism in a medium and subsequently recovering the produced fats from the micro-organism, wherein using as a micro-organism a genetically mutagenated strain of the genera Apiotrichum, Candida Cryptococcus, Endomyces, Hansenula, Lipomyces, Pichia, Rhodosporidium, Brhodotorul a Saccharomvces, Sporobolomyces, Torulopsis, Trichosooron or Yarrowia, wherein the enzyme system responsible for the conversion of C16-C24 saturated fatty acids, such as stearic acids, into oleic acid is totally or partially blocked by the genetic mutagenation or a fusant derived from in total two, three or four genetically different genetically mutagenated strains, all belonging to the above mentioned genera, wherein the enzyme responsible for the conversion of C16-C24 saturated fatty acids, such as stearic acid, into oleic acid is totally or partially blocked by the genetic mutagenation. Further information relating to these embodiments may be found in in the Australian patent AU-B-14153/88.

Another way to obtain edible fats from unicellular organisms may comprise recombinant DNA techniques to produce oleaginous recombinant cells that produce triglyceride oils having desired fatty acid profiles and regiospecific or stereospecific profiles and further extracting the oil, wherein the cell is optionally cultivated heterotrophically. Genes manipulated may include those encoding stearoyl-ACP desaturase, delta 12 fatty acid desaturase, acyl-ACP thioesterase, ketoacyl-ACP synthase, and lysophosphatidic acid acyltransferase and may include *FATA* thioesterase and the *FAD2* fatty acid desaturase genes. The fatty acid profile can be enriched in triglycerides of the SatUSat type.

In more detail, such unicellular cells for production of edible fats may for example include using as an oleaginous microalgal cell, such as microalgae of the phylum Chlorophtya, the class Trebouxiophytae, the order Chlorellales, or the family Chlorellacae, optionally obligately heterotrophic, and optionally comprising an exogenous sucrose invertase gene so that the cell can grow on sucrose as a sole carbon source, wherein the cell comprises an exogenous gene encoding an active LPAAT enzyme, and the cell produces an oil comprising triglycerides, wherein the oil is, by virtue of the LPAAT activity may be enriched in triglycerides of the SatUSat type.

Thus, a process for the production of edible fats may be used in some embodiments of the invention, where the process comprises cultivating a fat-producing unicellular organism in a medium and subsequently recovering the produced fats from the unicellular organism, wherein using as a unicellular organism a genetically mutagenated strain of the genera phylum Chlorophtya, the class Trebouxiophytae, the order Chlorellales, or the family Chlorellacae, optionally obligately heterotrophic, and optionally comprising an exogenous sucrose invertase gene so that the cell can grow on sucrose as a sole carbon source, wherein the cell comprises an exogenous gene encoding an active LPAAT enzyme and other genes manipulated may include those encoding stearoyl-ACP desaturase, delta 12 fatty acid desaturase, acyl-ACP thioesterase, ketoacyl-ACP synthase, and lysophosphatidic acid acyltransferase, *FATA* thioesterase and the *FAD2* fatty acid desaturase genes to obtain triglycerides enriched in the SatUSat type, wherein U may be oleic acid and Sat may be C16-C24 fatty acids, such as stearic acid. Further information relating to these embodiments may be found in the international patent application WO 2013/158938.

Furthermore, the edible fat may comprise a relatively high amount of SatOSat-triglycerides. Therefore, according to an advantageous embodiment of the invention, said edible fat comprises SatOSat-triglycerides in an amount of 50 - 99%, such as 60 - 99%, such as 70-98% by weight of said edible fat.

According to an embodiment of the invention, said edible fat comprises SatOSat-triglycerides in an amount of 50 - 99% by weight of said edible fat, such as 60 - 99 % by weight, such as 70-99% by weight, such as 80-99% by weight.

According to an embodiment of the invention, said edible fat comprises SatOSat-triglycerides in an amount of 50 - 98% by weight of said edible fat, such as 60 - 95 % by weight, such as 70-90% by weight, such as 75-85% by weight.

According to an embodiment of the invention, said edible fat comprises SatOSat-triglycerides in an amount of 50 - 93% by weight of said edible fat, such as 60 - 90% by weight of said edible fat.

It may be important to have a relatively high amount of high melting SatOSat-triglycerides in the edible fat. Thus, according to an advantageous embodiment of the invention, said edible fat comprises 50 - 95 % by weight of triglycerides having C16 - C24 saturated fatty acids in the *sn-1* and *sn-3* positions of the triglyceride and oleic acid in the *sn-2* position of the triglyceride, such as 60.0 - 95.0% by weight, such as 70 -95% by weight, or such as 50 - 90% by weight.

It may be advantageous to have a relatively high amount of high melting triglycerides, when compared to lower melting triglycerides of cocoa butter. Therefore, according to an advantageous embodiment of the invention, said edible fat has a weight-ratio between
- triglycerides having C18 - C24 saturated fatty acids in the *sn-1* and *sn-3* positions and oleic acid in the *sn-2* position of the triglyceride, and
- triglycerides having C16 - C24 saturated fatty acids in the *sn-1* and *sn-3* positions and oleic acid in the *sn-2* position of the triglyceride,
which is between 0.40 and 0.99 in said edible fat, such as between 0.45 and 0.99, such as between 0.50 and 0.99, such as between 0.55 and 0.99, such as between 0.60 and 0.99, such as between 0.65 and 0.99, such as between 0.70 and 0.99. Examples of lower melting triglycerides of cocoa butter, i.e. triglycerides which are part of the triglycerides having C16 - C24 saturated fatty acids in the *sn-1* and *sn-3* positions and oleic acid in the *sn-2* position of the triglyceride, but not part of triglycerides having C16 - C24 saturated fatty acids in the *sn-1* and *sn-3* positions and oleic acid in the *sn-*2 position of the triglyceride, include POP and POSt.

In the present context it should be understood that the weight-ratio of the above embodiment is the weight-ratio between Sat(C18-C24)OSat(C18-C24) triglycerides and Sat(C16-C24)OSat(C16-C24) triglycerides, wherein said Sat(C18-C24)OSat(C18-C24) triglycerides are triglycerides having C18 - C24 saturated fatty acids in the *sn-1* and *sn-3* positions and oleic acid in the *sn-2* position, and wherein said Sat(C16-C24)OSat(C16-C24) triglycerides are triglycerides having C16 - C24 saturated fatty acids in the *sn-1* and *sn-3* positions and oleic acid in the *sn-2* position.

Triglycerides having C18 - C24 saturated fatty acids in the sn-1 and sn-3 positions and oleic acid in the sn-2 position" are examples of SatOSat-triglycerides. It should be understood that the saturated fatty acids in the sn-1 and the sn-3 positions may not necessarily be the same, although they may be in some cases. Examples of such triglycerides include StOSt, StOA, StOB, StOLig, AOA, AOB, AOLig, BOB, BOLig, and LigOLig-triglycerides.

Triglycerides having C18 - C24 saturated fatty acids in the sn-1 and sn-3 positions and oleic acid in the sn-2 position may also comprise a combination of two or more of the triglycerides StOSt, StOA, StOB, StOLig, AOA, AOB, AOLig, BOB, BOLig, and LigOLig, where these triglycerides are comprised in an amount of 30.0 - 99.0% by weight of the triglycerides having C18 - C24 saturated fatty acids in the sn-1 and sn-3 positions and oleic acid in the sn-2 position, such as 40.0 - 99.0% by weight, such as 50.0 - 99.0% by weight, such as 60.0 - 99.0% by weight, such as 70.0 - 99.0% by weight.

According to the above embodiment, an edible fat comprising a relatively high amount of triglycerides having C18 - C24 saturated fatty acids in the *sn-1* and *sn-3* positions and oleic acid in the *sn-2* position may be particular preferable for the method of the invention, since they may form polymorphic crystal forms that have melting points at desired temperatures above 40 degrees Celsius and form polymorphic crystal forms that resemble or may be able to induce the desired form V polymorphic crystal form of chocolate when used as a seed for seeding chocolate.

According to an advantageous embodiment of the invention said edible fat has a weight-ratio between
- triglycerides having C18 saturated fatty acids in the *sn-1* and *sn-3* positions and oleic acid in the *sn-2* position of the triglyceride, and
- triglycerides having C16 - C18 saturated fatty acids in the *sn-1* and *sn-3* positions and oleic acid in the *sn-2* position of the triglyceride,
which is between 0.40 and 0.99 in said edible fat, such as between 0.45 and 0.99, such as between 0.50 and 0.99, such as between 0.55 and 0.99, such as between 0.60 and 0.99, such as between 0.65 and 0.99, such as between 0.70 and 0.99.

Triglycerides having C18 saturated fatty acids in the *sn-1* and *sn-3* positions and oleic acid in the *sn-2* position of the triglyceride may also be abbreviated StOSt-triglycerides.

One example of a high melting SatOSat-triglyceride is StOSt-triglycerides. According to an advantageous embodiment of the invention, said edible fat comprises StOSt-triglycerides in an amount of 40-99% by weight, such as 60-99%, such as 70-99% by weight, such as 70-90% by weight, wherein St stands for stearic acid.

One advantage of the above embodiment may be that StOSt-triglycerides are found in natural cocoa butter and that many StOSt-triglyceride rich sources have a relatively high compatibility and miscibility with cocoa butter, and also that StOSt-triglycerides may be obtained from various sources, such as vegetable, enzymatic and unicellular organisms.

According to an embodiment of the invention, the content of StOSt-triglycerides may originate from different sources, such as for example partly from a vegetable fat e.g. a shea stearin fraction and partly from a transesterified shea olein fraction.

According to an embodiment of the invention said edible fat comprises StOSt-triglycerides in an amount of 40- 80% by weight of said edible fat, such as 45 - 75% by weight of said edible fat or 50 - 70% by weight of said edible fat.

According to an embodiment of the invention said edible fat comprises StOSt-triglycerides in an amount of 40 - 90% by weight, such as 50 - 90%, such as 50 - 80%, wherein St stands for stearic acid.

Another example of a high melting SatOSat-triglyceride is AOA-triglycerides. Thus, according to a further advantageous embodiment of the invention, said edible fat comprises AOA-triglycerides in an amount of 40-99% by weight, such as 60-99%, such as 70-99%, such as 70-90%, wherein A stand for arachidic acid.

One advantage of the above embodiment may be that AOA-triglycerides are relatively high melting triglycerides, and that an obtained final product, such as a confectionary product such as chocolate, comprising said edible fat may have at least some high melting crystals and thus a relatively high heat stability.

One example of a high melting SatOSat-triglyceride is BOB-triglycerides. Therefore, according to an even further advantageous embodiment of the invention, said edible fat comprises BOB-triglycerides in an amount of 40-99% by weight, such as 60-99%, such as 70-99%, such as 70-90%, wherein B stand for behenic acid.

One advantage of the above embodiment may be that BOB-triglycerides are relatively high melting triglycerides, and that an obtained final product, such as a confectionary product such as chocolate, comprising said edible fat may have at least some high melting crystals and thus a relatively high heat stability.

One example of a high melting SatOSat-triglyceride is LigOLig-triglycerides. Thus according to a still further advantageous embodiment of the invention, said edible fat comprises LigOLig-triglycerides in an amount of 40-99% by weight, such as 60-99%, such as 70-99%, such as 70-90%, wherein Lig stand for lignoceric acid
One advantage of the above embodiment may be that LigOLig-triglycerides are relatively high melting triglycerides, and that an obtained final product, such as a confectionary product such as chocolate, comprising said edible fat may have at least some high melting crystals and thus a relatively high heat stability.

The utilized SatOSat-triglycerides may be obtained from various sources. According to an advantageous embodiment of the invention, said SatOSat-triglycerides comprises SatOSat-triglycerides obtained by transesterification in an amount of 0.01-99.9% by weight of said SatOSat-triglycerides, such as 50-99.9%, such as 80-99.9%, such as 90-99.9%, such as 95-99.9%.

According to a further embodiment of the invention, the edible fat may comprise triglycerides from both vegetable sources and triglycerides obtained by transesterification.

In some embodiments it may be desirable that the edible fat comprises triglycerides high in SatOSat-triglycerides obtained by transesterification.

According to a still further embodiment of the invention said SatOSat-triglycerides comprises SatOSat-triglycerides obtained by transesterification in an amount of 0.01-99.9% by weight of said SatOSat-triglycerides, such as 5-99% by weight, such as 10-99% by weight, such as 20-99% by weight, such as 30-99% by weight, such as 40-99% by weight, such as 50-99% by weight, such as 80-99% by weight, such as 90-99% by weight, such as 95-99% by weight.

One example of SatOSat-triglycerides obtained by transesterification is StOSt-triglycerides obtained by transesterification. Thus, according to further advantageous embodiment of the invention, said StOSt-triglycerides comprises StOSt-triglycerides obtained by transesterification in an amount of 0.01-99.9% by weight of said StOSt-triglycerides, such as 50-99.9%, such as 80-99.9%, such as 90-99.9%, such as 95-99.9%.

The content of StOSt-triglycerides may originate from different sources, such as for example partly from a vegetable fat e.g. a shea stearin fraction and partly from a transesterified source such as for example a transesterified shea olein fraction, however, according to the above embodiment, it is preferred that all or a fraction of the StOSt-triglycerides originates from transesterified StOSt-triglycerides.

One advantage of the above embodiment is that by using transesterified StOSt-triglycerides, the characteristics of the edible fat according to the method of the invention, may be controlled by the transesterification process. This controllable transesterification process for making triglycerides of a specific nature and composition e.g. StOSt, provides the possibility for tailoring the characteristics of the final product on one hand, but on the other hand also or alternatively to compensate for variations in the starting point ingredients/fats e.g. vegetable fats, which may vary in composition and/or characteristics from year to year and depending on the season or quality. Therefore, by producing triglycerides by means of transesterification, a wide range of possibilities may be available for obtaining an advantageous and/or specific triglyceride composition as for example StOSt-triglycerides even while decreasing the dependency for a specific quality, chemical composition, or other characteristics of the starting point fats.

The variation of input quality, as for example the variations in the quality of vegetable fats such as shea nuts and the potential for making StOSt-triglycerides containing fractions thereof, may e.g. be due to seasonal change of shea nut harvest, regional harvest failure, origin of the shea nuts, etc. However, by using a transesterification process to obtain triglycerides of a desired composition, the effect of such variations on the fat or triglyceride product may be obliterated or at least diminished.

According to an embodiment of the invention, at least 50 % by weight of the StOSt-triglycerides in the cocoa butter equivalent are obtained by transesterification, such as at least 80 % by weight, such as at least 90 % by weight, such as at least 95 % by weight, such as at least 98 % by weight, such as at least 99 % by weight.

According to an embodiment of the invention, the StOSt-triglycerides comprise StOSt-triglycerides obtained by transesterification.

According to an embodiment of the invention said StOSt-triglycerides comprises StOSt-triglycerides obtained by transesterification in an amount of 0.01-99.9% by weight of said StOSt-triglycerides, such as 5-99% by weight, such as 10-99% by weight, such as 20-99% by weight, such as 30-99% by weight, such as 40-99% by weight, such as 50-99% by weight, such as 80-99% by weight, such as 90-99% by weight, such as 95-99% by weight.

According to an embodiment of the invention, said StOSt-triglycerides comprises StOSt-triglycerides obtained by transesterification in an amount of 1-99% by weight of said StOSt-triglycerides, such as 5-95%, such as 10-80%, such as 10-50%, such as 30-50%.

Another example of SatOSat-triglycerides obtained by transesterification is AOA-triglycerides obtained by transesterification. Therefore, according to an further advantageous embodiment of the invention, said AOA-triglycerides comprises AOA-triglycerides obtained by transesterification in an amount of 0.01-99.9% by weight of said AOA-triglycerides, such as 50-99.9%, such as 80-99.9%, such as 90-99.9%, such as 95-99.9%.

According to an embodiment of the invention, said AOA-triglycerides comprises AOA-triglycerides obtained by transesterification in an amount of 1-99% by weight of said AOA-triglycerides, such as 5-95%, such as 10-80%, such as 10-50%, such as 30-50%.

Another example of SatOSat-triglycerides obtained by transesterification is BOB-triglycerides obtained by transesterification. Therefore, according to a further advantageous embodiment of the invention, said BOB-triglycerides comprises BOB-triglycerides obtained by transesterification in an amount of 0.01-99.9% by weight of said BOB-triglycerides, such as 50-99.9%, such as 80-99.9%, such as 90-99.9%, such as 95-99.9%.

According to an embodiment of the invention, said BOB-triglycerides comprises BOB-triglycerides obtained by transesterification in an amount of 1-99% by weight of said BOB-triglycerides, such as 5-95%, such as 10-80%, such as 10-50%, such as 30-50%.

Another example of SatOSat-triglycerides obtained by transesterification is LigOLig-triglycerides obtained by transesterification. Therefore, according to an advantageous embodiment of the invention, said LigOLig-triglycerides comprises LigOLig-triglycerides obtained by transesterification in an amount of 0.01-99.9% by weight of said LigOLig-triglycerides, such as 50-99.9%, such as 80-99.9%, such as 90-99.9%, such as 95-99.9%.

According to an embodiment of the invention, said LigOLig-triglycerides comprises LigOLig-triglycerides obtained by transesterification in an amount of 1-99% by weight of said LigOLig-triglycerides, such as 5-95%, such as 10-80%, such as 10-50%, such as 30-50%.

According to a further advantageous embodiment of the invention, said SatOSat-triglycerides obtained by transesterification are produced from an edible fat and a saturated fatty acid source under the influence of enzymes having 1,3-specific transesterification activity.

Thus, it should be understood, according to the above embodiment, that the SatOSat-triglycerides obtained by transesterification, which may comprise for example StOSt-triglycerides, BOB-triglycerides, AOA-triglycerides, LigOLig-triglycerides, or combinations thereof, are produced from an edible fat and a saturated fatty acid source under the influence of enzymes having 1,3-specific transesterification activity.

By using transesterification with a stearic acid source and in particular an enzymatic transesterification, preferably by means of 1,3-specific enzymes, a relatively high content of desired SatOSat-triglycerides, such as for example StOSt, AOA, BOB or LigOLig-triglycerides, may be established. One advantage of using an enzymatic transesterification may be that the conversion degree can be controlled in a relatively simple manner e.g. by the time, which the edible fat is in contact with the enzymes and the fatty acid source.

According to a further embodiment, the enzymes comprise lipase, such as a 1,3-specific lipase. Examples of such 1,3-specific lipases may e.g. be lipases of Rhizopus delemar, Mucor miehei, Aspergillus niger, Rhizopus arrhizus, Rhizopus niveus, Mucor javanicus, Rhizopus javanicus, Rhicomucor miezei, and Rhizopus oxyzae. Other 1,3-specific lipases may also be used.

In a further advantageous embodiment of the invention, said SatOSat-triglycerides obtained by transesterification are produced from an edible fat and a saturated fatty acid source under the influence of an acid, a base or a non-enzymatic catalyst or any combination thereof.

Depending on the desired SatOSat-triglycerides, various saturated fatty acid sources may be utilized. Thus, in an advantageous embodiment of the invention, said saturated fatty acid source comprises stearic acid and/or stearic acid esters, such as stearic acid methyl ester.

In one embodiment of the invention, the transesterification involves a reaction between OOO or StOO triglycerides and stearic acid from a stearic acids source, such as stearic acid itself or an ester thereof, such as a methyl ester, to give StOSt-triglycerides and an oleic acid and/or ester thereof. This transesterification reaction is preferably catalyzed by enzymes, preferably 1,3-specific enzymes. However, in other embodiments, triglycerides other that OOO and StOO may be used, as long as they have oleic acid in the *sn-2* position of the triglyceride. Thus, it should be ensured that the starting triglycerides for subjecting to transesterification have a sufficiently high content of triglycerides with oleic acid in the *sn-2* position.

An advantage of the above embodiment may be that an edible fat that may be less suitable as edible fat in the method according to the invention is converted into a triglyceride composition more suitable as edible fat in the method according to the method of the invention. A non-limiting example of this aspect may be by starting from an edible fat, such as a vegetable fat, such as a shea olein fraction, which may be less suitable since it has a low melting point, and then using transesterification to increase the melting point of the shea olein fraction by converting StOO and/or OOO triglycerides into StOSt, and subjecting the transesterified StOSt-triglycerides to the method of the invention, a large increase in the value of the shea olein fraction is achieved.

According to a further advantageous embodiment of the invention, said saturated fatty acid source comprises arachidic acid and/or arachidic acid esters, such as arachidic acid methyl ester.

According to an even further advantageous embodiment of the invention, said saturated fatty acid source comprises behenic acid and/or behenic acid esters, such as behenic acid methyl ester.

According to a still further advantageous embodiment of the invention, said saturated fatty acid source comprises lignoceric acid and/or lignoceric acid esters, such as lignoceric acid methyl ester.

Various sources of edible fat may be used for transesterification. Thus, according to an advantageous embodiment of the invention, the edible fat used for transesterification comprises a fat selected from the group consisting of shea, sunflower, soy, rapeseed, sal, safflower, palm, kokum, illipe, mango, mowra, cupuacu and any fraction and any combination thereof.

For example, the edible fat used for transesterification comprises or consists of high oleic sunflower, high oleic safflower oil, high oleic rapeseed oil or any combination thereof.

Generally, it should be understood that various oils and fats may be used as the edible fat used for transesterification. Particularly preferred oils and fats may be those having a relatively high content of triglycerides having oleic acid in the *sn-2* position.

In another example, the edible fat used for transesterification comprises or consists of shea olein or a shea olein fraction.

Generally, it should be understood that various oils and fats may be used as the edible fat. Particularly preferred oils and fats may be those having a relatively high content of triglycerides having stearic acid in the *sn-1* and/or *sn-3* position and oleic acid in the *sn-2* position.

It should be noted that in the context of various embodiments, a transesterified shea olein fraction may be processed subsequent to a transesterification. Such processing may preferably include a fractionation, so that only a part of an output from the transesterification constitutes the transesterified shea olein fraction, preferably a higher melting point fraction of the output being rich in StOSt-triglycerides.

The SatOSat-triglycerides of the edible fat may comprise SatOSat-triglycerides obtained from unicellular organisms. Thus, according to an advantageous embodiment of the invention, said SatOSat-triglycerides comprise SatOSat-triglycerides obtained from unicellular organisms in an amount of 0.1-99.9 % by weight of said SatOSat-triglycerides, such as 50-99.9%, such as 80-99.9%, such as 90-99.9%, such as 95-99.9%.

According to a further advantageous embodiment of the invention, said StOSt-triglycerides comprise StOSt-triglycerides obtained from unicellular organisms in an amount of 0.1-99.9% by weight of said StOSt-triglycerides, such as 50-99.9%, such as 80-99.9%, such as 90-99.9%, such as 95-99.9%.

According to a still further advantageous embodiment of the invention, said AOA-triglycerides comprise AOA-triglycerides obtained from unicellular organisms in an amount of 0.1-99.9% by weight of said AOA-triglycerides, such as 50-99.9%, such as 80-99.9%, such as 90-99.9%, such as 95-99.9%.

According to an even further advantageous embodiment of the invention, said BOB-triglycerides comprise BOB-triglycerides obtained from unicellular organisms in an amount of 0.1-99.9% by weight of said BOB-triglycerides, such as 50-99.9%, such as 80-99.9%, such as 90-99.9%, such as 95-99.9%.

According to a still even further advantageous embodiment of the invention, said LigOLig-triglycerides comprise LigOLig-triglycerides obtained from unicellular organisms in an amount of 0.1-99.9% by weight of said LigOLig-triglycerides, such as 50-99.9%, such as 80-99.9%, such as 90-99.9%, such as 95-99.9%.

According to a further advantageous embodiment of the invention, said unicellular organisms are selected from the group consisting of bacteria, algae or fungi, wherein fungi comprises yeast and mold.

The edible fat may also comprise fats obtained from vegetable sources, i.e. vegetable fats. Thus, according to an advantageous embodiment of the invention, said edible fat comprises a vegetable fat selected from a group consisting of shea, sal, kokum, illipe, mango, mowra, cupuacu, allanblackia, pentadesma and any fraction and any combination thereof.

Generally, it should be understood that various oils and fats may be used as the edible fat. Particularly preferred oils and fats may be those having a relatively high content of triglycerides having saturated fatty acids in the *sn-1* and *sn-3* position.

According to an embodiment of the invention said edible fat comprises or consists of shea stearin.

The edible fat may also comprise some lower melting fats. Thus, according to an advantageous embodiment of the invention, said edible fat comprises oils with a melting point below 25 degrees in an amount of 1.0-42% by weight, such as 3.0-35%, such as 3.5-27%, such as 5-20%.

According to a further advantageous embodiment of the invention, said edible fat comprises oils selected from the group comprising sunflower oil, high oleic sunflower oil, soybean oil, rape seed oil, high oleic rape seed oil, soy oil, olive oil, maize oil, peanut oil, sesame oil, hazelnut oil, almond oil, corn oil, or fractions or mixtures thereof.

In order to obtain an edible fat having said increased value of said endotherm melt peak, the edible fat is stored at a certain temperature. Thus, according to an advantageous embodiment of the invention, the temperature applied in step b) is above 30 degrees Celsius to 2 degrees Celsius below said increased value of said endotherm melt peak position, such as above 30 degrees Celsius to 6 degrees Celsius below said increased value of said endotherm melt peak position.

According to a further advantageous embodiment of the invention, the temperature applied in step b) is at least 33 degrees Celsius, such as at least 35 degrees Celsius, such as at least 37 degrees Celsius.

According to a still further advantageous embodiment of the invention, the temperature applied in step b) is 30 degrees Celsius to 39 degrees Celsius or 33 degrees Celsius to 38 degrees Celsius.

According to an even further advantageous embodiment of the invention, the method further comprises a step a1) following step a) and prior to step b), said step a1) consisting of cooling the edible fat to a temperature of between minus 30 degrees Celsius and 39 degrees Celsius, such as between minus 10 degrees Celsius and 38 degrees Celsius or between 0 degrees Celsius and 37 degrees Celsius.

Obtaining a relatively high value for said increased value of said endotherm melt peak position may result in very advantageous effects of the edible fat, i.e. when using it as a seed for seeding chocolate. Thus, according to an advantageous embodiment of the invention, said increased value of said endotherm melt peak position is 41 degrees Celsius or higher, such as 42 degrees Celsius or higher or 43 degrees Celsius or higher. This may particularly be the case when said edible fat comprises StOSt-triglycerides in an amount of 40-99% by weight, such as 60-99%, such as 70-99% by weight, such as 70-90% by weight, wherein St stands for stearic acid.

According to a further advantageous embodiment of the invention, said increased value of said endotherm melt peak position is about 44 degrees Celsius or higher, such as about 46 degrees Celsius or higher, such as about 47 degrees Celsius or higher, such as about 48 degrees Celsius or higher. This may particularly be the case when said edible fat comprises AOA-triglycerides in an amount of 40-99% by weight, such as 60-99%, such as 70-99%, such as 70-90%, wherein A stand for arachidic acid.

According to an even further advantageous embodiment of the invention, said increased value of said endotherm melt peak position is about 50 degrees Celsius or higher, such as about 51 degrees Celsius or higher, such as about 52 degrees Celsius or higher, such as about 53 degrees Celsius or higher. This may particularly be the case when said edible fat comprises BOB-triglycerides in an amount of 40-99% by weight, such as 60-99%, such as 70-99%, such as 70-90%, wherein B stand for behenic acid. According to a still further advantageous embodiment of the invention, said increased value of said endotherm melt peak position is at least 2 degrees Celsius above said starting value, such as at least 3 degrees Celsius, such as at least 4 degrees Celsius, such as at least 5 degrees Celsius, such as at least 6 degrees Celsius.

In order to obtain an edible fat having said increased value of said endotherm melt peak, the edible fat may be stored for a certain period of time. Therefore, according to an advantageous embodiment of the invention, step b) is performed for at least 5 hours, such as for at least 10 hours, such as for at least 20 hours, or for at least 24 hours.

According to a further embodiment of the invention, the step b) is performed for at least 10 hours such as for at least about 14 hours or for at least about 18 hours.

The edible fat may be provided in various forms. For example, according to an advantageous embodiment of the invention, the method further comprising processing the stored edible fat with an increased endotherm melt peak position of step b) to obtain a powder, flakes, chips, granules, pellets, drops or a slurry.

According to an embodiment of the invention, the method comprises grinding the stored edible fat with an increased endotherm melt peak position of step b) to a powder.

According to an advantageous embodiment of the invention, the method further comprising partly melting the stored edible fat with an increased endotherm melt peak position of step b) to a slurry.

Also disclosed herein is a confectionary product comprising said edible fat manufactured according to the method in any of its embodiments.

According to an advantageous embodiment of the disclosure, the confectionary product is a chocolate or chocolate-like product.

Moreover, further disclosed is the use of the edible fat manufactured according to the method in any of its embodiments for production of confectionary products.

By applying the method of the present invention to an edible fat and using the so treated fat as an ingredient, such as a seeding agent, in the manufacture of confectionary products, such as chocolate or chocolate-like products, the manufacturing process of the confectionary products may be simplified and/or the confectionary products may obtain improved properties with respect to, for example, bloom stability and sensory parameters both during production and/or over time especially at elevated temperatures. When the edible fat displays an increased value of an endotherm DSC melt peak position of 40 degrees Celsius or higher, such as 41 degrees Celsius, 42 degrees Celsius or 43 degrees Celsius or higher, and is used as a seed for seeding confectionary products, the seeding capability of the edible fat may be retained, when the confectionary product has been exposed to elevated temperatures up to the value of the increased endotherm melt peak position.

According to an advantageous embodiment of the disclosure, said edible fat is used as a seed to seed a chocolate. The use of said edible fat to as a seed to seed a chocolate may be combined with the use of tempering, before and/or after the addition of the edible fat to the chocolate. The edible fat treated according to the method of the present invention is particularly useful for seeding purposes in the manufacture of chocolate products. Seeding with high-melting crystals obtained by the method of the present invention may assist formation of high-melting crystals in the chocolate during tempering or even make possible the omission of a tempering process, whereby the quality of the chocolate may be improved, and its production may be simplified.

According to an advantageous embodiment of the disclosure, said edible fat is used as a powder, flakes, chips granules, pellets, drops or a slurry.

### Examples

### Example 1:

### Endotherm melt peak position of an edible fat comprising enzymatically transesterified StOSt-triglycerides as a function of storage time and storage temperature.

### DSC analysis

In the following examples, samples were analyzed by Differential Scanning Calorimetry (DSC). This was done by a METTLER TOLEDO DSC 823e with a HUBER TC45 immersion cooling system. 10 +/- 1 mg of sample were hermetically sealed in a 40 microliter aluminum pan, with an empty pan as reference. Samples were initially held at 20.0 degrees Celsius for 2 minutes. Samples were heated from 20.0 degrees Celsius to 50.0 degrees Celsius at a rate of 3 degrees Celsius per minute to produce a melting thermogram. Experiments were performed in duplicate.

### HPLC analysis

The quantitative determination of the amounts of specific triglycerides of the edible fat was determined by an AOCS HPLC-TAG method: Ce 5b-89 modified, including utilization of Ultra High Performance Liquid Chromatography (UPLC) and utilization of a mobile phase of acetonitrile/MTBE instead of acetonitrile/acetone. The results are listed in table 1.

### Preparation of an edible fat comprising enzymatically transesterified StOSt-triglycerides

An initial oil blend was made comprising a high oleic sunflower oil and stearic acid esters, such as for example 30% high oleic sunflower oil and 70% ethyl stearate. The initial oil blend was then subjected to transesterification using an enzyme, such as a lipase, having 1,3-specific transesterification activity. Ester by-products, such as ethyl esters, was then removed from the enzymatically transesterified oil by e.g. distillation or any other suitable method known to someone skilled in the art. The enzymatically transesterified oil was then fractionated, such as solvent fractionated, to produce a StOSt enriched fat. The enzymatically transesterified oil may also be dry fractionated or aqueous detergent fractionated. The StOSt enriched fat was bleached and deodorized to obtain an edible fat comprising enzymatically transesterified StOSt-triglycerides.

**Table 1. Amounts of specific triglycerides of the edible fat. (C18-C24)O(C18-24)* = triglycerides having C18 - C24 saturated fatty acids in the sn-1 and sn-3 positions and oleic acid in the sn-2 position for composition SC1.**

| | **Amount (% w/w)** |
|---|---|
| POP | 1.3 |
| POSt | 8.6 |
| StOSt | 66.0 |
| StOA | 1.2 |
| AOA | 1.9 |
| SatOSat | 79.0 |
| Ratio StOSt/SatOSat | 0.84 |
| (C18-C24)0(C18-24)* | 69.1 |
| Ratio (C18-C24)O(C18-24)*/SatOSat | 0.87 |

### DSC data

### Procedure:

50 gram samples of an edible fat comprising enzymatically transesterified StOSt-triglycerides was cooled from 60 degrees Celsius to 20 degrees Celsius and thereafter placed at isothermal storages at 20 +/-0.5 degrees Celsius, 25 +/-0.5 degrees Celsius, 30 +/-0.5 degrees Celsius, 33 +/-0.5 degrees Celsius, 35 +/-0.5 degrees Celsius, 36 +/-0.5 degrees Celsius and 37 +/-0.5 degrees Celsius, respectively.

Non-isothermal DSC thermograms were obtained at intervals between 0 hours (prior to insertion into isothermal cabinets) and 168 hours of storage in the isothermal cabinets.

The measurement at 0h corresponds to the starting value referred to herein.

Table 2 shows non-isothermal DSC melt peak positions after storage at different temperatures and for different times of storage.

**Table 2. Non-isothermal DSC melt peak positions for different storage temperatures (in degrees Celsius) and for different storage time (in hours).**

| **Time (h)** | **Storage temperature (degrees Celsius)** | | | | | | |
|---|---|---|---|---|---|---|---|
| | **20** | **25** | **30** | **33** | **35** | **36** | **37** |
| **0** | 36.7 | 36.7 | 36.7 | 36.7 | 36.7 | 36.7 | 36.7 |
| **1** | - | - | - | - | - | - | 36.5 |
| **2** | - | - | - | - | - | - | 39.1 |
| **5** | 37.2 | 36.5 | 36.5 | 37.9 | 36.8 | - | 38.8 |
| **24** | 36.8 | 36.5 | 36.6 | 41.2 | - | 42.8 | 42.7 |
| **48** | 37.3 | 37.0 | 37.1 | - | 41.8 | 42.6 | 43.0 |
| **72** | - | - | - | - | 42.3 | - | 42.9 |
| **96** | 36.9 | 36.5 | 36.7 | - | 41.6 | - | 42.7 |
| **120** | - | - | - | - | - | 43.4 | 42.8 |
| **168** | 36.7 | 36.5 | 40.8 | 41.8 | 42.2 | 43.0 | 42.8 |

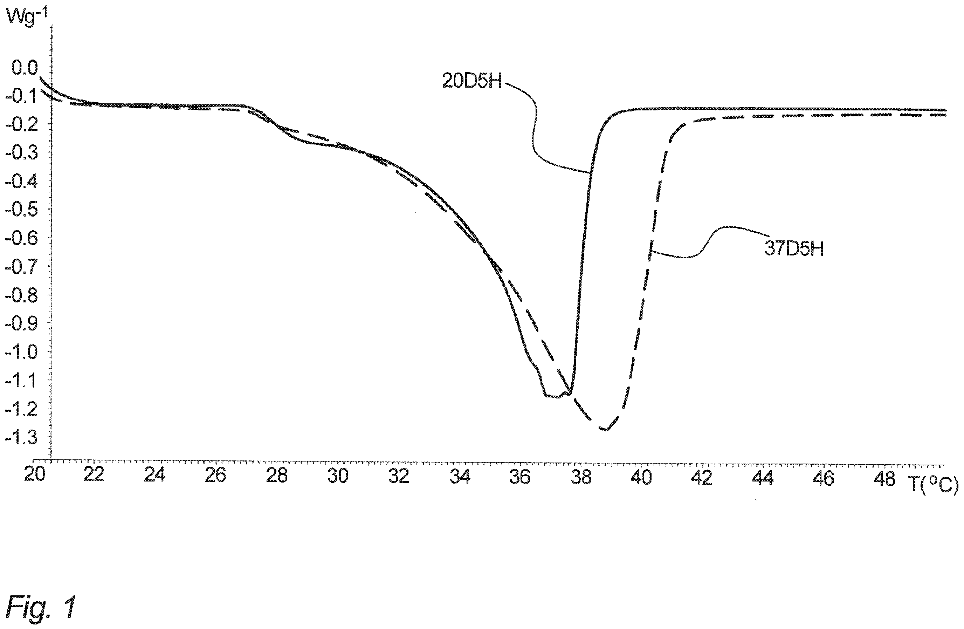

The results after 5 hours at 20 degrees Celsius and 37 degrees Celsius are shown in figure 1. In more detail, figure 1 indicates the effect on the main endotherm melt peak position after 5 hours of isothermal storage at 20 degrees Celsius and 37 degrees Celsius, respectively, the starting value of the main endotherm melt peak position being about 36.7 degrees Celsius. Solid line: 20 degrees Celsius for 5 hours. Dashed line: 37 degrees Celsius for 5 hours.

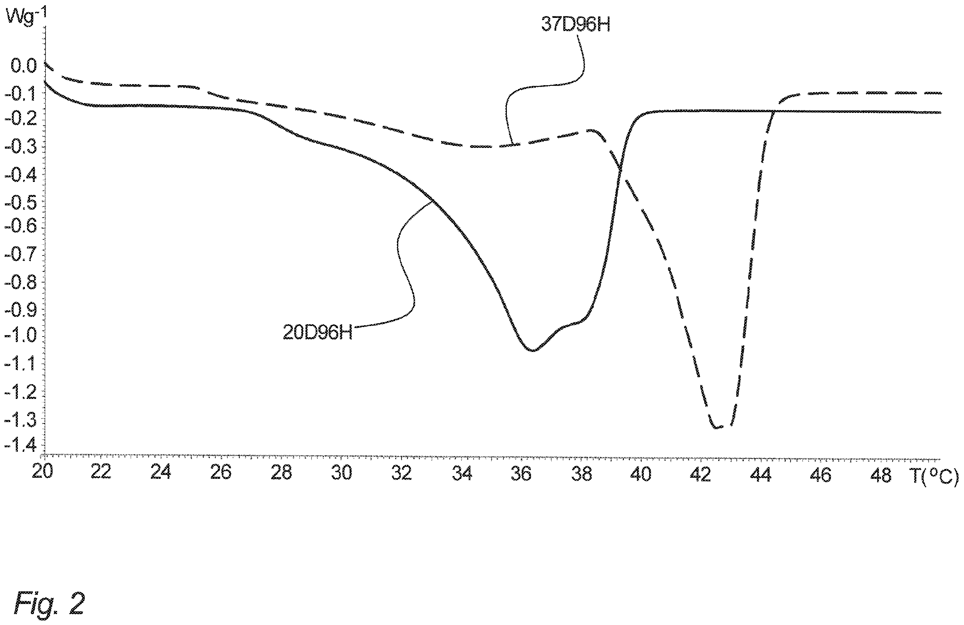

The results after 96 hours at 20 degrees Celsius and 37 degrees Celsius are shown in figure 2. In more detail, figure 2 indicates the effect on the main endotherm melt peak position after 96 hours of isothermal storage at 20 degrees Celsius and 37 degrees Celsius, respectively, the starting value of the main endotherm melt peak position being about 36.7 degrees Celsius. Solid line: 20 degrees Celsius for 96 hours. Dashed line: 37 degrees Celsius for 96 hours.

The results show that the main endotherm melt peak position is increased rapidly within hours or days of storage at the temperatures indicated.

The peak positions above 40 degrees Celsius are typical for higher melting crystal polymorphic forms of StOSt, such as form V and VI.

The broadening of the peak representing 20 degrees Celsius when going from figure 1 to figure 2 indicates beginning transformation of fat crystals into more stable forms.

Isothermal storage has been used for convenience during the experiments shown in the table, but storage at varying temperatures, such as between 20 degrees Celsius and 39 degrees Celsius, will also promote the formation of high melting crystals in the edible fat, thereby increasing the main endotherm melt peak position when compared to the starting value a t = 0 hours.

### Example 2

### Further possible compositions

Further compositions SC2-5 where made to illustrate how various compositions of edible fat may be used.

In example compositions SC2-3, shown in table 3, the main triglyceride component was StOSt, as for composition SC1. The compositions SC2-3 may be prepared in a similar way as illustrated in example 1.

In example composition SC4, shown in table 4, the main triglyceride component was AOA. The composition SC4 may be prepared by use of enzymatic transesterification, as also used in example 1, but using ethyl arachidate instead of ethyl stearate. It should be noted that the storage temperature must be adapted to the applied functional triglyceride. In the case of AOA applied as the functional triglyceride, as in the below table 4, the temperature may advantageously be increased, compared to example 1, to obtain the desired DSC melt peak position.

In example compositions SC5, shown in table 5, the main triglyceride component was BOB. The composition SC5 may be prepared by use of enzymatic transesterification, as also used in example 1, but using ethyl behenate instead of ethyl stearate. It should be noted that the storage temperature must be adapted to the applied functional triglyceride. In the case of BOB applied as the functional triglyceride, as in the below table 5, the temperature may advantageously be increased, compared to example 1, to obtain the desired DSC melt peak position.

**Table 3. Amounts of specific triglycerides of the edible fat. (C18-C24)O(C18-24)* = triglycerides having C18 - C24 saturated fatty acids in the sn-1 and sn-3 positions and oleic acid in the sn-2 position for compositions SC2-SC3.**

| | **Amount (% w/w)** | |
|---|---|---|
| | SC2 | SC3 |
| SatOSat other than (C18-C24)O(C18-24)* | 5.0 | 14.5 |
| StOSt | 76.0 | 56.0 |
| (C18-C24)O(C18-24)* other than StOSt | 1.5 | 2.0 |
| SatOSat | 82.5 | 72.5 |
| Ratio StOSt/SatOSat | 0.92 | 77.2 |
| (C18-C24)O(C18-24)* | 77.5 | 58.0 |
| Ratio (C18-C24)O(C18-24)*/SatOSat | 0.93 | 0.80 |

**Table 4. Amounts of specific triglycerides of the edible fat. (C18-C24)O(C18-24)* = triglycerides having C18 - C24 saturated fatty acids in the sn-1 and sn-3 positions and oleic acid in the sn-2 position for composition SC4.**

| | **Amount (% w/w)** |
|---|---|
| | SC4 |
| SatOSat other than (C18-C24)O(C18-24)* | 5.0 |
| AOA | 71.0 |
| (C18-C24)O(C18-24)* other than AOA | 1.0 |
| SatOSat | 77.0 |
| Ratio AOA/SatOSat | 0.92 |
| (C18-C24)O(C18-24)* | 72.0 |
| Ratio (C18-C24)O(C18-24)*/SatOSat | 0.94 |

**Table 5. Amounts of specific triglycerides of the edible fat. (C18-C24)O(C18-24)* = triglycerides having C18 - C24 saturated fatty acids in the sn-1 and sn-3 positions and oleic acid in the sn-2 position for composition SC5.**

| | **Amount (% w/w)** |
|---|---|
| | SC5 |
| SatOSat other than (C18-C24)O(C18-24)* | 4.5 |
| BOB | 69.0 |
| (C18-C24)O(C18-24)* other than BOB | 1.5 |
| SatOSat | 75.0 |
| Ratio BOB/SatOSat | 0.92 |
| (C18-C24)O(C18-24)* | 70.5 |
| Ratio (C18-C24)O(C18-24)*/SatOSat | 0.94 |

Examples of "SatOSat other than (C18-C24)O(C18-24)*" as used in example 2 include POP and POSt.

## Claims

1. Method of increasing an endotherm melt peak position of an edible fat to an increased value compared to a starting value,
said increased value being 40 degrees Celsius or higher, said endotherm melt peak position being measured by Differential Scanning Calorimetry by heating samples of 10 +/- 1 mg of said edible fat from 20 degrees Celsius to 65 degrees Celsius at a rate of 3 degrees Celsius per minute to produce a melting thermogram defining said endotherm melt peak position, the method comprising the steps of:
a) melting the edible fat by applying heat,
b) storing the edible fat at a temperature below said increased value of said endotherm melt peak position for at least 5 hours at a temperature of at least 30 degrees Celsius, whereby an increase in said endotherm melt peak position for said edible fat is obtained when compared to said starting value,
wherein said edible fat comprises SatOSat-triglycerides in an amount of 40 - 99% by weight,
wherein said edible fat comprises triglycerides obtained from non-vegetable sources, wherein Sat stands for a saturated fatty acid, and O stands for oleic acid.

2. The method according to claim 1, wherein said triglycerides obtained from non-vegetable sources comprise triglycerides obtained by transesterification.

3. The method according to any of the claims 1-2, wherein said triglycerides obtained from non-vegetable sources comprise triglycerides obtained from unicellular organisms.

4. The method according to any of the claims 1-3, wherein said edible fat comprises SatOSat-triglycerides in an amount of 50 - 99%, such as 60 - 99%, such as 70-98% by weight of said edible fat.

5. The method according to any of the claim 1-4, wherein said edible fat comprises 50 - 95 % by weight of triglycerides having C16 - C24 saturated fatty acids in the *sn-1* and *sn-3* positions of the triglyceride and oleic acid in the *sn-2* position of the triglyceride, such as 60.0 - 95.0% by weight, such as 70 -95% by weight, or such as 50 - 90% by weight.

6. The method according to any of the claims 1-5, wherein said edible fat has a weight-ratio between
- triglycerides having C18 - C24 saturated fatty acids in the *sn-1* and *sn-3* positions and oleic acid in the *sn-2* position of the triglyceride, and
- triglycerides having C16 - C24 saturated fatty acids in the *sn-1* and *sn-3* positions and oleic acid in the *sn-2* position of the triglyceride,
which is between 0.40 and 0.99 in said edible fat, such as between 0.45 and 0.99, such as between 0.50 and 0.99, such as between 0.55 and 0.99, such as between 0.60 and 0.99, such as between 0.65 and 0.99, such as between 0.70 and 0.99.

7. The method according to any of the claims 1-6, wherein said edible fat comprises StOSt-triglycerides in an amount of 40-99% by weight, such as 60-99%, such as 70-99% by weight, such as 70-90% by weight, wherein St stands for stearic acid.

8. The method according to any of the claims 1-7, wherein said SatOSat-triglycerides comprises SatOSat-triglycerides obtained by transesterification in an amount of 0.01-99.9% by weight of said SatOSat-triglycerides, such as 50-99.9%, such as 80-99.9%, such as 90-99.9%, such as 95-99.9%.

9. The method according to claim 7, wherein said StOSt-triglycerides comprises StOSt-triglycerides obtained by transesterification in an amount of 0.01-99.9% by weight of said StOSt-triglycerides, such as 50-99.9%, such as 80-99.9%, such as 90-99.9%, such as 95-99.9%.

10. The method according to any of the claims 8-9, wherein said SatOSat-triglycerides obtained by transesterification are produced from an edible fat and a saturated fatty acid source under the influence of enzymes having 1,3-specific transesterification activity.

11. The method according to claim 10, wherein said saturated fatty acid source comprises stearic acid and/or stearic acid esters, such as stearic acid methyl ester.

12. The method according to claim 10 or -11, wherein the edible fat used for transesterification comprises a fat selected from the group consisting of shea, sunflower, soy, safflower, palm, rapeseed, sal, kokum, illipe, mango, mowra, cupuacu and any fraction and any combination thereof.

13. The method according to any of claims 10-12, wherein the edible fat used for transesterification comprises or consists of high oleic sunflower, high oleic safflower oil, high oleic rapeseed oil or any combination thereof.

14. The method according to any of the claims 10-13, wherein the edible fat used for transesterification comprises or consists of shea olein or a shea olein fraction.

15. The method according to any of the claims 1-14, wherein said SatOSat-triglycerides comprise SatOSat-triglycerides obtained from unicellular organisms in an amount of 0.1-99.9 % by weight of said SatOSat-triglycerides, such as 50-99.9%, such as 80-99.9%, such as 90-99.9%, such as 95-99.9%.

16. The method according to any of the claims 7-15, wherein said StOSt-triglycerides comprise StOSt-triglycerides obtained from unicellular organisms in an amount of 0.1-99.9% by weight of said StOSt-triglycerides, such as 50-99.9%, such as 80-99.9%, such as 90-99.9%, such as 95-99.9%.

17. The method according to any of the claims 1-16, wherein said edible fat comprises a vegetable fat selected from a group consisting of shea, sal, kokum, illipe, mango, mowra, cupuacu, allanblackia, pentadesma and any fraction and any combination thereof.

18. The method according to any of the claims 1-17, wherein said edible fat comprises oils with a melting point below 25 degrees in an amount of 1.0-42% by weight, such as 3.0-35%, such as 3.5-27%, such as 5-20%.

19. The method according to any of the claims 1-18, wherein said edible fat comprises oils selected from the group comprising sunflower oil, high oleic sunflower oil, soybean oil, rape seed oil, high oleic rape seed oil, soy oil, olive oil, maize oil, peanut oil, sesame oil, hazelnut oil, almond oil, corn oil, or fractions or mixtures thereof.

20. The method according to any of the claims 1-19, wherein the temperature applied in step b) is 30 degrees Celsius to 2 degrees Celsius below said increased value of said endotherm melt peak position, such as above 30 degrees Celsius to 6 degrees Celsius below said increased value of said endotherm melt peak position.

21. The method according to any of the claims 1-20, wherein the temperature applied in step b) is 30 degrees Celsius to 39 degrees Celsius or 33 degrees Celsius to 38 degrees Celsius.

22. The method according to any of the claims 1-21, wherein the method further comprises a step a1) following step a) and prior to step b), said step a1) consisting of cooling the edible fat to a temperature of between minus 30 degrees Celsius and 39 degrees Celsius, such as between minus 10 degrees Celsius and 38 degrees Celsius or between 0 degrees Celsius and 37 degrees Celsius.

23. The method according to any of the claims 1-22, wherein said increased value of said endotherm melt peak position is 41 degrees Celsius or higher, such as 42 degrees Celsius or higher or 43 degrees Celsius or higher.

24. The method according to any of the claims 1-23, wherein said increased value of said endotherm melt peak position is at least 2 degrees Celsius above said starting value, such as at least 3 degrees Celsius, such as at least 4 degrees Celsius, such as at least 5 degrees Celsius, such as at least 6 degrees Celsius.

25. The method according to any of the claims 1-24, wherein step b) is performed for at least 5 hours, such as for at least 10 hours, such as for at least 20 hours, or for at least 24 hours.

26. The method according to any of the claims 1-25, wherein the method further comprising processing the stored edible fat with an increased endotherm melt peak position of step b) to obtain a powder, flakes, chips, granules, pellets, drops or a slurry.

27. The method according to any of the claims 1-26, wherein the method further comprising partly melting the stored edible fat with an increased endotherm melt peak position of step b) to a slurry.

## Patentansprüche

1. Verfahren zum Erhöhen einer Position einer endothermen Schmelzspitze eines essbaren Fettes auf einen erhöhten Wert, verglichen mit einem Startwert,
wobei der erhöhte Wert 40° Celsius oder höher beträgt und die Position der endothermen Schmelzspitze durch dynamische Differenzkalorimetrie gemessen wird, indem Proben von 10 +/- 1 mg des essbaren Fettes von 20 Grad Celsius auf 65 Grad Celsius mit einer Rate von 3 Grad Celsius pro Minute erhitzt werden, um ein Schmelzthermogramm zu erzeugen, das die Position der endothermen Schmelzspitze definiert, wobei das Verfahren die folgenden Schritte umfasst:
a) Schmelzen des essbaren Fettes durch das Zuführen von Wärme,
b) Lagern des essbaren Fettes bei einer Temperatur unterhalb des erhöhten Wertes der Position der endothermen Schmelzspitze für wenigstens 5 Stunden bei einer Temperatur von wenigstens 30 Grad Celsius, wodurch eine Erhöhung der Position der endothermen Schmelzspitze für das essbare Fett erreicht wird, verglichen mit dem Startwert,
wobei das essbare Fett SatOSat-Triglyceride in einem Gewichtsanteil von 40 - 99% umfasst,
wobei das essbare Fett Triglyceride umfasst, die aus nicht-pflanzlichen Quellen erhalten wurden,
wobei Sat für eine gesättigte Fettsäure steht und O für Ölsäure steht.

2. Verfahren nach Anspruch 1, wobei die aus nicht-pflanzlichen Quellen erhaltenen Triglyceride Triglyceride umfassen, die durch Umesterung erhalten wurden.

3. Verfahren nach einem der Ansprüche 1 bis 2, wobei die aus nicht-pflanzlichen Quellen erhaltenen Triglyceride Triglyceride umfassen, die aus Einzeller-Organismen erhalten wurden.

4. Verfahren nach einem der Ansprüche 1 bis 3, wobei das essbare Fett SatOSat-Triglyceride in einem Gewichtsanteil von 50 - 99%, wie etwa 60 - 99%, wie etwa 70-98% des essbaren Fettes umfasst.

5. Verfahren nach einem der Ansprüche 1 bis 4, wobei das essbare Fett 50 - 95% nach Gewicht an Triglyceriden umfasst, die C16 - C24 gesättigte Fettsäuren in den sn-1 und sn-3-Positionen des Triglycerides und Ölsäure in der sn-2-Position des Triglycerides haben, wie etwa 60,0 - 95,0% nach Gewicht, wie etwa 70 - 95% nach Gewicht oder wie etwa 50 - 90% nach Gewicht.

6. Verfahren nach einem der Ansprüche 1 bis 5, wobei das essbare Fett ein Gewichtsverhältnis hat zwischen
- Triglyceriden, die C18 - C24 gesättigte Fettsäuren in den sn-1 und sn-3-Positionen und Ölsäure in der sn-2-Position des Triglycerides haben, und
- Triglyceriden, die C16 - C24 gesättigte Fettsäuren in den sn-1 und sn-3-Positionen und Ölsäure in der sn-2-Position des Triglycerides haben,
das zwischen 0,40 und 0,99 in dem essbaren Fett liegt, wie etwa zwischen 0,45 und 0,99, wie etwa zwischen 0,50 und 0,99, wie etwa zwischen 0,55 und 0,99, wie etwa zwischen 0,60 und 0,99, wie etwa zwischen 0,65 und 0,99, wie etwa zwischen 0,70 und 0,99.

7. Verfahren nach einem der Ansprüche 1 bis 6, wobei das essbare Fett StOSt-Triglyceride mit einem Gewichtsanteil von 40 - 99% umfasst, wie etwa 60 - 99%, wie etwa 70 - 99% nach Gewicht, wie etwa 70 - 90% nach Gewicht, wobei St für Stearinsäure steht.

8. Verfahren nach einem der Ansprüche 1 bis 7, wobei die SatOSat-Triglyceride durch Umesterung erhaltene SatOSat-Triglyceride in einem Gewichtsanteil von 0,01 - 99,9% der SatOSat-Triglyceride umfassen, wie etwa 50 - 99,9%, wie etwa 80 - 99,9%, wie etwa 90 - 99,9%, wie etwa 95 - 99,9%.

9. Verfahren nach Anspruch 7, wobei die StOSt-Triglyceride durch Umesterung erhaltene StOSt-Triglyceride in einem Gewichtsanteil von 0,01 - 99,9% der StOSt-Triglyceride umfassen, wie etwa 50 - 99,9%, wie etwa 80 - 99,9%, wie etwa 90 - 99,9%, wie etwa 95 - 99,9%.

10. Verfahren nach einem der Ansprüche 8 bis 9, wobei die durch Umesterung erhaltenen SatOSat-Triglyceride aus einem essbaren Fett und einer Quelle für gesättigte Fettsäuren hergestellt werden, unter der Einwirkung von Enzymen, die eine 1,3-spezifische Umesterungswirkung haben.

11. Verfahren nach Anspruch 10, wobei die Quelle für gesättigte Fettsäuren Stearinsäure und/oder Stearinsäureester, wie etwa Stearinsäuremethylester, umfasst.

12. Verfahren nach Anspruch 10 oder 11, wobei das für die Umesterung verwendete essbare Fett ein Fett umfasst, das aus der Gruppe gewählt ist, die Folgendes umfasst: Sheabaum, Sonnenblumen, Soja, Öldistel, Palm, Rapssaat, Salbaum, Butterbaum, Illipefett, Mango, Mowrafett, Cupuacu und eine beliebige Fraktion von und eine beliebige Kombination aus diesen.

13. Verfahren nach einem der Ansprüche 10 bis 12, wobei das für die Umesterung verwendete essbare Fett high oleic Sonnenblumenöl, high oleic Distelöl, high oleic Rapssaatöl oder eine beliebige Kombination aus diesen umfasst oder daraus besteht.

14. Verfahren nach einem der Ansprüche 10 bis 13, wobei das für die Umesterung verwendete essbare Fett Sheaölsäure oder eine Sheaölsäurefraktion umfasst oder daraus besteht.

15. Verfahren nach einem der Ansprüche 1 bis 14, wobei die SatOSat-Triglyceride aus Einzeller-Organismen erhaltene SatOSat-Triglyceride in einem Gewichtsanteil von 0,1 - 99,9% der SatOSat-Triglyceride umfassen, wie etwa 50 - 99,9%, wie etwa 80 - 99,9%, wie etwa 90 - 99,9%, wie etwa 95 - 99,9%.

16. Verfahren nach einem der Ansprüche 7 bis 15, wobei die StOSt-Triglyceride aus Einzeller-Organismen erhaltene StOSt-Triglyceride in einem Gewichtsanteil von 0,1 - 99,9% der StOSt-Triglyceride umfassen, wie etwa 50 - 99,9%, wie etwa 80 - 99,9%, wie etwa 90 - 99,9%, wie etwa 95 - 99,9%.

17. Verfahren nach einem der Ansprüche 1 bis 16, wobei das essbare Fett ein pflanzliches Fett umfasst, das aus der Gruppe gewählt ist, die aus Folgendem besteht: Sheabaum, Salbaum, Butterbaum, Illipefett, Mango, Mowrafett, Cupuacu, Allanblackiabaum, Pentadesmabaum und eine beliebige Fraktion von und eine beliebige Kombination aus diesen.

18. Verfahren nach einem der Ansprüche 1 bis 17, wobei das essbare Fett Öle mit einem Schmelzpunkt unter 25 Grad in einem Gewichtsanteil von 1,0 - 42% umfasst, wie etwa 3,0 - 35%, wie etwa 3,5 - 27%, wie etwa 5 - 20%.

19. Verfahren nach einem der Ansprüche 1 bis 18, wobei das essbare Fett Öle umfasst, die aus der Gruppe gewählt sind, die Folgendes umfasst: Sonnenblumenöl, high oleic Sonnenblumenöl, Sojabohnenöl, Rapssaatöl, high oleic Rapssaatöl, Sojaöl, Olivenöl, Maisöl, Erdnussöl, Sesamöl, Haselnussöl, Mandelöl, Kornöl, oder Fraktionen oder Mischungen davon.

20. Verfahren nach einem der Ansprüche 1 bis 19, wobei die in Schritt b) angewendete Temperatur 30 Grad Celsius bis 2 Grad Celsius unter dem erhöhten Wert der Position der endothermen Schmelzspitze liegt, wie etwa über 30 Grad Celsius bis 6 Grad Celsius unter dem erhöhten Wert der Position der endothermen Schmelzspitze.

21. Verfahren nach einem der Ansprüche 1 bis 20, wobei die in Schritt b) angewendete Temperatur 30 Grad Celsius bis 39 Grad Celsius oder 33 Grad Celsius bis 38 Grad Celsius beträgt.

22. Verfahren nach einem der Ansprüche 1 bis 21, wobei das Verfahren außerdem einen Schritt a1) umfasst, der auf Schritt a) folgt und vor Schritt b) liegt, wobei der Schritt a1) darin besteht, das essbare Fett auf eine Temperatur zwischen minus 30 Grad Celsius und 39 Grad Celsius abzukühlen, wie etwa zwischen minus 10 Grad Celsius und 38 Grad Celsius oder zwischen 0 Grad Celsius und 37 Grad Celsius.

23. Verfahren nach einem der Ansprüche 1 bis 22, wobei der erhöhte Wert der Position der endothermen Schmelzspitze bei 41 Grad Celsius oder höher liegt, wie etwa 42 Grad Celsius oder höher oder 43 Grad Celsius oder höher.

24. Verfahren nach einem der Ansprüche 1 bis 23, wobei der erhöhte Wert der Position der endothermen Schmelzspitze wenigstens 2 Grad Celsius über dem Startwert liegt, wie etwa wenigstens 3 Grad Celsius, wie etwa wenigstens 4 Grad Celsius, wie etwa wenigstens 5 Grad Celsius, wie etwa wenigstens 6 Grad Celsius.

25. Verfahren nach einem der Ansprüche 1 bis 24, wobei Schritt b) für wenigstens 5 Stunden ausgeführt wird, wie etwa für wenigstens 10 Stunden, wie etwa für wenigstens 20 Stunden oder für wenigstens 24 Stunden.

26. Verfahren nach einem der Ansprüche 1 bis 25, wobei das Verfahren außerdem das Verarbeiten des gelagerten essbaren Fettes mit einer erhöhten Position der endothermen Schmelzspitze aus Schritt b) umfasst, um ein Pulver, Flocken, Späne, Körner, Pellets, Tropfen oder einen Schlamm zu erhalten.

27. Verfahren nach einem der Ansprüche 1 bis 26, wobei das Verfahren es außerdem umfasst, das gelagerte essbare Fett mit einer erhöhten Position der endothermen Schmelzspitze aus Schritt b) teilweise zu einem Schlamm aufzuschmelzen.

## Revendications

1. Procédé d'augmentation d'une position de pic de fusion endothermique d'une matière grasse comestible à une valeur augmentée comparée à une valeur initiale,
ladite valeur augmentée étant 40 degrés Celsius ou plus élevée, ladite position de pic de fusion endothermique étant mesurée par calorimétrie différentielle à balayage par chauffage d'échantillons de 10 +/- 1 mg de ladite matière grasse comestible de 20 degrés Celsius à 65 degrés Celsius à une vitesse de 3 degrés Celsius par minute pour produire un thermogramme de fusion définissant ladite position de pic de fusion endothermique, le procédé comprenant les étapes de :
a) fusion de la matière grasse comestible par application de chaleur,
b) conservation de la matière grasse comestible à une température inférieure à ladite valeur augmentée de ladite position de pic de fusion endothermique pendant au moins 5 heures à une température d'au moins 30 degrés Celsius, de sorte qu'une augmentation dans ladite position de pic de fusion endothermique pour ladite matière grasse comestible est obtenue quand elle est comparée à ladite valeur initiale,
où ladite matière grasse comestible comprend des triglycérides SatOSat en une quantité de 40 - 99 % en poids,
où ladite matière grasse comestible comprend des triglycérides obtenus à partir de sources non végétales, où Sat représente un acide gras saturé et O représente l'acide oléique.

2. Procédé selon la revendication 1, où lesdits triglycérides obtenus à partir de sources non végétales comprennent des triglycérides obtenus par transestérification.

3. Procédé selon l'une quelconque des revendications 1-2, où lesdits triglycérides obtenus à partir de sources non végétales comprennent des triglycérides obtenus à partir d'organismes unicellulaires.

4. Procédé selon l'une quelconque des revendications 1-3, où ladite matière grasse comestible comprend des triglycérides SatOSat en une quantité de 50 - 99 %, comme 60 - 99 %, comme 70 - 98 % en poids de ladite matière grasse comestible.

5. Procédé selon l'une quelconque des revendications 1-4, où ladite matière grasse comestible comprend 50 - 95 % en poids de triglycérides ayant des acides gras saturés en C16 - C24 dans les positions *sn-1* et *sn-3* du triglycéride et de l'acide oléique dans la position *sn-2* du triglycéride, notamment 60,0 - 95,0% en poids, notamment 70 - 95 % en poids, ou notamment 50 - 90 % en poids.

6. Procédé selon l'une quelconque des revendications 1-5, où ladite matière grasse comestible a un rapport en poids entre
- les triglycérides ayant des acides gras saturés en C18 - C24 dans les positions *sn-1* et *sn-3* et de l'acide oléique dans la position *sn-2* du triglycéride, et
- les triglycérides ayant des acides gras saturés en C16 - C24 dans les positions *sn-1* et *sn-3* et de l'acide oléique dans la position *sn-2* du triglycéride,
qui est entre 0,40 et 0,99 dans ladite matière grasse comestible, notamment entre 0,45 et 0,99, notamment entre 0,50 et 0,99, notamment entre 0,55 et 0,99, notamment entre 0,60 et 0,99, notamment entre 0,65 et 0,99, comme entre 0,70 et 0,99.

7. Procédé selon l'une quelconque des revendications 1-6, où ladite matière grasse comestible comprend des triglycérides StOSt en une quantité de 40 - 99 % en poids, notamment 60 - 99 %, notamment 70 - 99 % en poids, notamment 70 - 90 % en poids, où St représenté l'acide stéarique.

8. Procédé selon l'une quelconque des revendications 1 - 7, où lesdits triglycérides SatOSat comprennent des triglycérides SatOSat obtenus par transestérification en une quantité de 0,01 - 99,9 % en poids desdits triglycérides SatOSat, comme 50 - 99,9 %, comme 80 - 99,9 %, comme 90 - 99,9 %, comme 95 - 99,9 %.

9. Procédé selon la revendication 7, où lesdits triglycérides StOSt comprennent des triglycérides StOSt obtenus par transestérification en une quantité de 0,01 - 99,9 % en poids desdits triglycérides StOSt, notamment 50 - 99,9 %, notamment 80 - 99,9 %, notamment 90 - 99,9 %, notamment 95 - 99,9 %.

10. Procédé selon l'une quelconque des revendications 8 - 9, où lesdits triglycérides SatOSat obtenus par transestérification sont produits à partir d'une matière grasse comestible et d'une source d'acides gras saturés sous l'influence d'enzymes ayant une activité de transestérification 1,3-spécifïque.

11. Procédé selon la revendication 10, où ladite source d'acides gras saturés comprend de l'acide stéarique et/ou des esters de l'acide stéarique, comme le méthylester de l'acide stéarique.

12. Procédé selon la revendication 10 ou 11, où la matière grasse comestible utilisée pour la transestérification comprend une matière grasse choisie dans le groupe consistant en karité, tournesol, soja, carthame, palme, colza, sal, kokum, illipé, mangue, mowra, cupuaçu et toute fraction et toute combinaison de celles-ci.

13. Procédé selon l'une quelconque des revendications 10-12, où la matière grasse comestible utilisée pour la transestérification comprend ou consiste en huile de tournesol hautement oléique, huile de carthame hautement oléique, huile de colza hautement oléique ou toute combinaison de celles-ci.

14. Procédé selon l'une quelconque des revendications 10-13, où la matière grasse comestible utilisée pour la transestérification comprend ou consiste en oléine de karité ou une fraction d'oléine de karité.

15. Procédé selon l'une quelconque des revendications 1-14, où lesdits triglycérides SatOSat comprennent des triglycérides SatOSat obtenus à partir d'organismes unicellulaires en une quantité de 0,1 - 99,9 % en poids desdits triglycérides SatOSat, notamment 50 - 99,9 %, notamment 80 - 99,9 %, notamment 90 - 99,9 %, notamment 95 - 99,9 %.

16. Procédé selon l'une quelconque des revendications 7-15, où lesdits triglycérides StOSt comprennent des triglycérides StOSt obtenus à partir d'organismes unicellulaires en une quantité de 0,1 - 99,9 % en poids desdits triglycérides StOSt, notamment 50 - 99,9 %, notamment 80 - 99,9 %, notamment 90 - 99,9 %, notamment 95 - 99,9 %.

17. Procédé selon l'une quelconque des revendications 1-16, où ladite matière grasse comestible comprend une matière grasse végétale choisie dans un groupe consistant en karité, sal, kokum, illipé, mangue, mowra, cupuaçu, allanblackia, pentadesma et toute fraction et toute combinaison de celles-ci.

18. Procédé selon l'une quelconque des revendications 1-17, où ladite matière grasse comestible comprend des huiles ayant un point de fusion inférieur à 25 degrés en une quantité de 1,0 - 42 % en poids, notamment 3,0 - 35 %, notamment 3,5 - 27 %, notamment 5 - 20 %.

19. Procédé selon l'une quelconque des revendications 1-18, où ladite matière grasse comestible comprend des huiles choisies dans le groupe comprenant l'huile de tournesol, l'huile de tournesol hautement oléique, l'huile de graines de soja, l'huile de colza, l'huile de colza hautement oléique, l'huile de soja, l'huile d'olive, l'huile de maïs, l'huile d'arachide, l'huile de sésame, l'huile de noisette, l'huile d'amande, l'huile de maïs, ou des fractions ou mélanges de celles-ci.

20. Procédé selon l'une quelconque des revendications 1-19, où la température appliquée dans l'étape b) est
30 degrés Celsius à 2 degrés Celsius en-dessous de ladite valeur augmentée de ladite position de pic de fusion endothermique, notamment au-dessus de 30 degrés Celsius à 6 degrés Celsius en-dessous de ladite valeur augmentée de ladite position de pic de fusion endothermique.

21. Procédé selon l'une quelconque des revendications 1-20, où la température appliquée dans l'étape b) est
30 degrés Celsius à 39 degrés Celsius ou 33 degrés Celsius à 38 degrés Celsius.

22. Procédé selon l'une quelconque des revendications 1-21, où le procédé comprend en outre une étape a1) après l'étape a) et avant l'étape b), ladite étape a1) consistant en le refroidissement de la matière grasse comestible à une température entre moins 30 degrés Celsius et 39 degrés Celsius, notamment entre moins 10 degrés Celsius et 38 degrés Celsius ou entre 0 degré Celsius et 37 degrés Celsius.

23. Procédé selon l'une quelconque des revendications 1-22, où ladite valeur augmentée de ladite position de pic de fusion endothermique est 41 degrés Celsius ou plus élevée, notamment 42 degrés Celsius ou plus élevée ou 43 degrés Celsius ou plus élevée.

24. Procédé selon l'une quelconque des revendications 1-23, où ladite valeur augmentée de ladite position de pic de fusion endothermique est au moins 2 degrés Celsius au-dessus de ladite valeur initiale, notamment au moins 3 degrés Celsius, notamment au moins 4 degrés Celsius, notamment au moins 5 degrés Celsius, notamment au moins 6 degrés Celsius.

25. Procédé selon l'une quelconque des revendications 1-24, où l'étape b) est accomplie pendant au moins 5 heures, notamment pendant au moins 10 heures, notamment pendant au moins 20 heures, ou pendant au moins 24 heures.

26. Procédé selon l'une quelconque des revendications 1-25, où le procédé comprenant en outre la transformation de la matière grasse comestible conservée ayant une position de pic de fusion endothermique augmentée de l'étape b) pour obtenir une poudre, des flocons, des copeaux, des granules, des pastilles, des gouttes ou une bouillie.

27. Procédé selon l'une quelconque des revendications 1-26, où le procédé comprenant en outre la fusion partielle de la matière grasse comestible conservée ayant une position de pic de fusion endothermique augmentée de l'étape b) en une bouillie.
